# EUROPÄISCHE PATENTANMELDUNG

(11) **EP 4 357 192 A1**
(43) Veröffentlichungstag der Anmeldung: **24.04.2024**
(21) Anmeldenummer: 23204184.8
(22) Anmeldetag: 17.10.2023
(51) Int. Cl.: B60L 53/60, B60L 53/62, B60L 53/64, H02J 7/00

(54) **VERFAHREN ZUM LADEN EINES ENERGIESPEICHERS EINER, INSBESONDERE SELBSTFAHRENDEN, BAUMASCHINE MIT ELEKTRISCHER ENERGIE UND SELBSTFAHRENDE BAUMASCHINE, INSBESONDERE BODENVERDICHTUNGSMASCHINE, UND EXTERNE LADEQUELLE**

(30) Priorität: 21.10.2022 DE 102022211173
(71) Anmelder: BOMAG GmbH, 56154 Boppard (DE)
(72) Erfinder: Geers, Christian, 56154 Boppard (DE); Kröber, Albert, 56154 Boppard (DE)
(74) Vertreter: Zimmermann & Partner Patentanwälte mbB

(57) **Zusammenfassung**

Verfahren zum Laden eines Energiespeichers einer selbstfahrenden Ladequelle mit elektrischer Energie und selbstfahrende Baumaschine, insbesondere Bodenverdichtungsmaschine, und externe Ladequelle.

## Beschreibung

Die Erfindung betrifft ein Verfahren zum Laden eines Energiespeichers einer, insbesondere selbstfahrenden, Baumaschine mit elektrischer Energie und eine selbstfahrende Baumaschine, insbesondere eine Bodenverdichtungsmaschine, und eine externe Ladequelle
Gattungsgemäße Baumaschinen werden vorwiegend im Straßen- und Wegebau, sowie beim Bau von Plätzen oder Start- und Landebahnen beispielsweise auf Flughäfen eingesetzt. Sie weisen üblicherweise einen Maschinenrahmen und häufig ein Fahrwerk auf. Sie können als handgeführte Baumaschinen, ferngesteuerte Baumaschine, autonom fahrende Baumaschinen oder als Aufsitzbaumaschinen, bei denen der Fahrer auf der Baumaschine selbst sitzt, ausgebildet sein. Derartige Baumaschinen sind beispielsweise in den Patentanmeldungen DE102012015888A1, DE102012017337A1, DE102013005991A1, DE102013004948A1, DE102015009085A1, DE102010046401A1, DE102010014902A1 und DE102013016127A1 beschrieben.

Sofern es sich bei der Baumaschine um eine selbstfahrende Baumaschine handelt, also eine Baumaschine, die aus eigenem Antrieb fährt, umfasst sie eine Fahreinrichtung, wie beispielsweise ein Rad, eine Walzbandage und/oder ein Kettenlaufwerk. Solche Baumaschinen bewegen sich im Arbeitsbetrieb mit ihren Fahreinrichtungen über den zu bearbeitenden Boden. Bodenverdichtungsmaschinen verdichten beispielsweise beim Überfahren des Bodenuntergrundes denselben, Straßenfräsen fräsen mithilfe einer Fräseinrichtung Bodenuntergrundmaterial in einer Frästiefe ab, Straßenfertiger verlegen eine Bodenmaterialmatte auf dem Bodenuntergrund etc. Diese Grundfunktionen der einzelnen Baumaschinen sind im Stand der Technik bekannt.

Zum Antrieb der Baumaschine, sei es zum Fahrantrieb und/oder zum Antrieb der jeweiligen Arbeitseinrichtung, umfassen die Baumaschinen häufig ein Primärantriebsaggregat, häufig einen Verbrennungsmotor. Bekanntermaßen bringen solche Primärantriebsaggregate den Nachteil erhöhter Emissionen in Form von Abgasen mit sich, die teilweise einer aufwändigen Nachbehandlung der entstehenden Abgase bedürfen, um gesetzlichen Emissionsanforderungen gerecht zu werden. Es sind aus diesem Grund auch bereits Baumaschinen mit einem zumindest teilweise elektromotorischen Antriebskonzept bekannt, wobei zumindest solche Baumaschinen, deren Energiespeicher ein Energiespeicher für elektrische Energie, also eine Batterie bzw. ein Akkumulator, ist, bei für den jeweiligen Anwendungsbereich ausreichender Kapazität verbrennungsmotorfrei ausgelegt sind und damit im praktischen Einsatz emissionsfrei betrieben werden können.

Diese Baumaschinen umfassen einen Energiespeicher für elektrische Energie, wobei diese Energiespeicher (nachstehend stehen "Energiespeicher" für "Speicher für elektrische Energie") von seiner Ladekapazität her deutlich über der Ladekapazität eines Energiespeichers für konventionellverbrennungsmotorisch angetriebene Baumaschinen liegt und insbesondere einer Speicherkapazität >10kWh, insbesondere >25 kWh, aufweisen können. Es können zudem sogenannte Hybridmaschinen mit umfasst sein, wobei die nachstehend beschriebene Erfindung insbesondere hinsichtlich des Primärantriebsaggregates rein elektromotorisch angetriebene Baumaschinen betrifft. Die vorliegend relevanten Baumaschinen sind somit insbesondere verbrennungsmotorfrei ausgebildet.

Aufgrund der vergleichsweise hohen Speicherkapazitäten der verwendeten Energiespeicher sind auch die für eine Ladung des Energiespeichers mit elektrischer Energie erforderlichen Zeiträume und Strommengen nicht unerheblich. So ist es insbesondere nicht möglich, einen derartigen Energiespeicher innerhalb weniger Minuten in nennenswertem Umfang zu Laden. Die erforderlichen Ladezeiten müssen daher in der Arbeitsplanung sinnvoll berücksichtigbar sein. Gleichzeitig können je nach Einsatzort die verfügbaren Ladebedingungen, beispielsweise aufgrund der Lage des Einsatzortes in einem Gebiet mit praktisch keiner elektrischen Infrastruktur bis hin zu dicht besiedelten Wohn- und/oder Industriebereichen und/oder aufgrund der insgesamt zu ladenden Fahrzeuge und/oder tageszeitabhängiger Stromkosten erheblich variieren. Gleichzeitig ist den Nutzern an einem möglichst schonenden Ladevorgang gelegen, um den Energiespeicher möglichst lange mit maximaler Ladekapazität oder zumindest mit nur geringen Ladekapazitätsverlusten betreiben zu können.

Hiervon ausgehend ist es die Aufgabe der Erfindung, eine Möglichkeit anzugeben, den Ladevorgang eines Energiespeichers einer, insbesondere selbstfahrenden, Baumaschine für einen Bediener zu verbessern.

Die Lösung der Aufgabe gelingt mit einem Verfahren zum Laden eines Energiespeichers einer, insbesondere selbstfahrenden, Baumaschine, insbesondere Bodenverdichtungsmaschine, sowie einer, insbesondere selbstfahrenden, Baumaschine, insbesonders Bodenverdichtungsmaschine, und einer externen Ladequelle gemäß den unabhängigen Ansprüchen. Bevorzugte Weiterbildungen sind in den abhängigen Ansprüchen angegeben.

Eine selbstfahrende Baumaschine bezeichnet eine Baumaschine, die sich aus eigenem Antrieb über den Bodenuntergrund in eine Fahrrichtung bewegt. Dazu weisen solche Baumaschinen wenigstens einen Fahrantrieb, beispielsweise einen Hydraulik- oder Elektromotor, auf, der wenigstens eine der mehreren Fahreinrichtungen, beispielsweise Räder, Kettenlaufwerke, Walzbandage, antreibt. Es können auch mehrere derart angetriebene Fahreinrichtungen vorhanden sein. Die für den Antrieb des oder der Hydraulik- oder Elektromotoren des Fahrantriebs erforderliche Antriebsenergie ist erfindungsgemäß in einem Energiespeicher für elektrische Energie gespeichert, wobei sich die Erfindung sowohl auf solche Antriebsstränge bezieht, bei denen ein Fahrantriebsmotor direkt aus dem Energiespeicher mit elektrischer Energie versorgt wird, als auch solche Antriebsstränge betrifft, bei denen elektrische Energie von einem Elektromotor in eine andere Energieform, insbesondere hydraulische Energie, umgewandelt wird, wobei die hydraulische Energie vorzugsweise einen Hydraulikmotor als Fahrantriebsmotor antreibt. Wesentlich für die vorliegende Erfindung ist jedoch für selbstfahrende Baumaschinen, dass das Primärantriebsaggregat für insbesondere zumindest den Fahrantrieb das Primärantriebsaggregat der Baumaschine darstellt.

Für das erfindungsgemäße Verfahren zum Laden eines Energiespeichers einer, insbesondere selbstfahrenden, Baumaschine mit elektrischer Energie sind nun mehrere Schritte vorgesehen, die bevorzugt in der nachstehend angegebenen Reihenfolge ablaufen, zum Teil in ihrer Reihenfolge aber auch ausgetauscht werden können.

Für das erfindungsgemäße Verfahren ist in einem Schritt a) ein Verbinden des Energiespeichers der Baumaschine mit einer externen Ladequelle vorgesehen. Über diese Verbindung wird somit eine stromleitende Verbindung zwischen der externen Ladequelle und dem Energiespeicher der Baumaschine hergestellt. Extern ist dabei so zu verstehen, dass die Ladequelle im Fahr- und Arbeitsbetrieb der Baumaschine nicht von dieser mitgeführt wird. Eine Ladequelle kann beispielsweise eine stationäre Ladestation, ein Ladepunkt, ein Generator oder ähnliches sein. Wesentlich ist, dass die Ladequelle elektrische Energie von außerhalb der Baumaschine zur Verfügung stellt, die über die hergestellte Verbindung dem Energiespeicher zum Aufladen desselben zugeführt werden kann. Die Art der Verbindung kann, bis auf den Umstand, dass sie trennbar und im verbundenen Zustand stromleitend ist, variieren. Hier können beispielsweise an sich bekannte Stecker-Buchse-Vorrichtungen, beispielsweise Typ 1, Typ 2, CCS oder CHAdeMO oder vergleichbare Steckertypen, verwendet werden. Auch induktiv wirkende Ladungsverbindung sind von der Erfindung mit umfasst.

In einem Schritt b) erfolgt ein Auswählen eines Lademodus aus wenigstens zwei zur Verfügung stehenden und zueinander hinsichtlich des zeitlichen Ladeverlaufes verschiedenen Lademodi an einer Ladesteuerung. Ein Lademodus bezeichnet ein Ladeverfahren, das nach einem oder mehreren Vorgaben abläuft. Solche Vorgaben können beispielsweise Uhrzeiten, die aktuellen Stromversorgungssituation an der Ladequelle, Ladegeschwindigkeiten etc. sein. Dies wird nachstehend noch anhand verschiedener beispielhaft angegebener Lademodi näher erläutert werden. Der zeitliche Ladeverlauf bezeichnet die Entwicklung des Ladezustandes des elektrischen Energiespeichers über die Zeit, wobei der Ladezustand angibt, zu welchem Anteil der Energiespeicher bereits geladen ist, beispielsweise in Prozent von der maximalen Beladung. Der Ladezustand wird auch als *"state of charge"* (SOC) bezeichnet. Die Ladesteuerung bezeichnet eine Steuereinheit, die steuert, wieviel elektrische Energie pro Zeiteinheit in den Energiespeicher über die Verbindung zur Ladequelle eingespeist wird. Die Ladesteuerung kann Teil der Baumaschine und/oder der Ladequelle sein und steuert den Ladevorgang, wenn der Energiespeicher mit elektrischer Energie von der Ladequelle beladen werden soll. Die Ladesteuerung kann Teil eines Ladegerätes sein. Wesentlich ist, dass die Ladesteuerung derart ausgebildet ist, dass sie wenigstens zwei zueinander verschiedene Lademodi umfasst, so dass ein Bediener beispielsweise zwischen diesen beiden Lademodi auswählen und damit den Ladevorgang beeinflussen kann. Idealerweise unterscheiden sich die beide zueinander verschiedenen Lademodi in ihren Bezugsparametern derart voneinander, dass ein in dem einen Lademodus relevanter und für den Ladevorgangs maßgeblicher Bezugsparameter, beispielsweise die Tageszeit, in dem anderem Lademodus keine Berücksichtigung findet bzw. irrelevant ist, beispielsweise allein ein möglich schnelles Laden des Energiespeichers verfolgt, unabhängig von der Tageszeit. Das Auswählen der Lademodi kann dazu über eine geeignete Eingabeeinrichtung erfolgen, die Teil der Baumaschine, Teil der Ladequelle oder separat hierzu, beispielsweise in Form eines Mobilteils (insbesondere Tablet und/oder Smartphone via APP), ausgebildet sein kann. Es versteht sich, dass im Fall eines Mobilteils eine geeignete Kommunikationsverbindung, beispielsweise Bluetooth, NFC, WLAN etc., zur Ladesteuerung der Ladequelle und/oder der Baumaschine vorhanden sein muss. Es kann auch vorgesehen sein, dass von einer abseits der Baumaschine und/oder Ladequelle vorhandenen zentralen Serverstation auf die Ladesteuerung zur Vorgabe des ausgewählten Lademodus zugegriffen werden kann.

Ist ein Lademodus ausgewählt, erfolgt im Schritt c) ein von der Ladesteuerung gesteuertes Laden des Energiespeichers aus der externen Ladequelle gemäß dem ausgewählten Lademodus. Dies kann je nach Ausführungsform der Baumaschine, der Ladesteuerung und der Baumaschine ein DC- und/oder AC-Laden sein. Wichtig ist in diesem Zusammenhang, dass das reine Auswählen des Lademodus nicht per se den tatsächlichen Ladevorgang insofern starten muss, als dass dann unmittelbar elektrische Energie von der Ladequelle dem Energiespeicher zugeführt wird. Der Ladevorgang kann nach einem Auswählen eines Lademodus auch Phasen umfassen, in denen dem Energiespeicher keine elektrische Energie von der externen Ladequelle zugeführt wird. Das Auswählen eines Lademodus startet somit nicht notwendigerweise direkt auch eine Stromübertragung von der externen Ladequelle zum Energiespeicher, wenngleich dies durchaus möglich und vom Umfang der Erfindung mit umfasst ist. So kann es insbesondere auch vorgesehen sein, dass das Auswählen des Lademodus gemäß Schritt b) zeitlich vor dem Verbinden des Energiespeichers der Baumaschine mit einer externen Ladequelle gemäß Schritt a) erfolgt, ein Bediener mithin einen Lademodus vorab auswählt, bevor überhaupt eine Ladungsverbindung zwischen Energiespeicher und externer Ladequelle besteht.

Nach dem Laden erfolgt im Schritt d) ein Beenden des Ladevorgangs, insbesondere dann, wenn ein vorgegebenes Ladeziel erreicht worden ist. Ein Ladeziel kann beispielsweise das Erreichen eines vorgegebenen Ladezustandes, der Ablauf eines vorgegebenen Zeitfensters oder ähnliches sein. Das Beenden des Ladevorgangs bezeichnet vorliegend somit insbesondere einen Zustand, in dem dem Energiespeicher elektrische Energie nicht mehr zur Erhöhung des Ladezustandes bzw. zur Erhöhung der Beladung des Energiespeichers (d.h. des SOCs) mit elektrischer Energie von der externen Ladequelle zugeführt wird. Ein eventuell bestehender Stromfluss von der externen Ladequelle zum Energiespeicher zur reinen Aufrechterhaltung eines erreichten Ladezustandes, so dass der SOC somit nicht weiter erhöht wird, wird hierunter nicht verstanden.

Insbesondere das Laden und Beenden des Ladevorgangs wird von der Ladesteuerung überwacht und gesteuert. Es versteht sich, dass hierzu eine geeignete Sensorik an der Ladequelle und/oder der Baumaschine vorhanden ist, die die für die Überwachung und Steuerung des Ladevorgangs erforderlichen Informationen erfasst und an die Ladesteuerung übermittelt. Eine solche Sensorik ist im Stand der Technik bereits bekannt.

Zum Abschließen des erfindungsgemäßen Verfahrens erfolgt in einem Schritt e) schließlich ein Trennen der Verbindung des Energiespeichers der Baumaschine mit der externen Ladequelle. Dies kann insbesondere ein Herausziehen eines Ladesteckers, ein Trennen einer induktiven Ladeverbindung oder ähnliches sein. Damit besteht keine zur Übertragung elektrischer Energie elektrisch wirkende, beispielsweise mechanische, Verbindung mehr zwischen der Baumaschine und der Ladequelle, so dass die Baumaschine mit wieder aufgefülltem Energiespeicher autark zur Ladequelle bewegt und beispielsweise an einen Einsatzort verbracht werden kann.

Der Schritt a) kann dahingehend weitergebildet werden, dass mit dem Verbinden des Energiespeichers der Baumaschine mit der externen Ladequelle bzw. mit dem Herstellen eines Ladeverbindung zwischen diesen beiden Einheiten wenigstens ein Erkennen der Verbindung des Energiespeichers mit der externen Ladequelle detektiert wird und daraufhin weitere Steuervorgaben erfolgen. Diese Steuervorgaben können von der Ladesteuerung stammen oder auch von beispielsweise einer Maschinensteuerung der Baumaschine vorgegeben werden. Es kann beispielsweise vorgesehen sein, dass daraufhin ein Sperren wenigstens einer Maschinenfunktion erfolgt, beispielsweise ein Sperren eines Fahrantriebs und/oder Unwuchterregerantriebs. Dies stellt sicher, dass die Baumaschine bei bestehender Ladeverbindung nicht unbeabsichtigt von der Ladequelle abfahren und dadurch beispielsweise die Steckverbindung der Ladeverbindung, ein Ladekabel, die Ladequelle oder die Baumaschine beschädigt. Ergänzend oder alternativ kann es ferner vorgesehen sein, dass ein Aktivieren wenigstens einer Maschinenfunktion erfolgt. Dies kann beispielsweise das Aktivieren einer Anzeigeeinrichtung, insbesondere einer Anzeigeeinrichtung mit einer Eingabeeinrichtung, insbesondere eines Touchscreens, sein. Insbesondere aber nicht notwendigerweise dann, wenn der Schritt b) zeitlich vor dem Schritt a) erfolgt, kann ergänzend oder alternativ eine Ladesteckerverriegelung aktiviert werden. Diese ist derart ausgebildet, dass der Stecker der Ladeverbindung in der Ladebuchse der Ladeverbindung, insbesondere mechanisch und/oder magnetisch, arretiert wird, so dass sichergestellt ist, dass die Verbindung während des Ladevorgangs nicht unbeabsichtigt gelöst und der Ladevorgang damit unvorhergesehen unterbrochen wird. Weiter ergänzend oder alternativ kann mit dem Verbinden der tatsächliche Ladevorgang gestartet werden.

Hinsichtlich der konkreten Ausgestaltung der wenigstens zwei zueinander verschiedenen Lademodi kann auf eine Vielzahl, insbesondere auf die Benutzerbedürfnisse abgestimmte, Varianten zurückgegriffen werden. Zur weiteren Erläuterung besonders bewährter Lademodi werden nachstehend verschiedene im Schritt b) auswählbare Lademodi beschrieben. Es können von der Ladesteuerung wenigstens zwei verschiedene Lademodi umfasst sein, wobei wenigstens einer der Lademodi wenigstens einer der nachstehend erwähnten Lademodi ist. Es ist bevorzugt, wenn mehr als zwei verschiedene Lademodi von der Ladesteuerung umfasst sind. Ferner versteht es sich, dass die Auswahl eines Lademodus durch einen Bediener mithilfe einer geeigneten Eingabeeinrichtung (Tastatur, Touchscreen, APP) und einer geeigneten Menüführung erfolgen kann.

Ein besonders bevorzugter Lademodus ist ein Lademodus "Sofortladen". Dieser zeichnet sich dadurch aus, dass mit einer festgelegten und/oder von der Ladesteuerung gesteuerten und bevorzugt wenigstens 20% unterhalb einer maximal möglichen und/oder verfügbaren Ladeleistung geladen wird. Der Start der tatsächlichen Stromübertragung erfolgt dabei zeitlich direkt nach einem der Schritte a) oder b), je nachdem, welcher Schritt von diesen beiden Schritten zeitlich später erfolgt. Die Ladeleistung bezeichnet die Menge an elektrischer Energie, die in einem bestimmten Zeitraum von der externen Ladequelle an die Baumaschine übertragen wird. Die maximal verfügbare Ladeleistung bezeichnet die maximale Menge an elektrischer Energie, die von dem Energiespeicher aufgenommen, von der externen Ladequelle zur Verfügung gestellt oder über die Ladeverbindung übertragen wird, jeweils pro Zeiteinheit. Der Kerngedanke dieses Lademodus liegt somit darin, dass sofort und ohne zeitliche Verzögerung mit dem Laden begonnen wird, dabei aber der Energiespeicher aufgrund der Nutzung einer Ladeleistung, die unterhalb einer maximal möglichen Ladeleistung liegt, der Energiespeicher vergleichsweise schonend geladen wird.

Der Lademodus "Schnellladen" hingegen zeichnet sich dadurch aus, dass der Energiespeicher mit einer maximal verfügbaren Ladeleistung geladen wird. Die maximal verfügbare Ladeleistung bezeichnet die in der aktuellen Situation maximal möglich Ladeleistung. Diese kann durch die externe Ladequelle, den Energiespeicher, den Ladeverbindung oder die Ladesteuerung begrenzt werden. Wesentlich hier ist, dass nicht nur sofort mit dem Ladevorgang gestartet wird, sondern gleichzeitig auch so schnell wie möglich geladen wird, auch wenn dies auf Kosten der Haltbarkeit des Energiespeichers erfolgt.

Ein weiterer Lademodus kann "Laden nach definierter Startzeit" sein. Wesentlich für diesen Lademodus ist, dass der Ladevorgang zu einer vorgegebenen Zeit gestartet wird. Sind die Schritte a) und b) erfolgt, kann das tatsächliche Laden in diesem Lademodus von der Ladesteuerung zeitlich gesehen erst deutlich später initiiert werden. Zwischen dem Starten des Ladevorgangs als Ganzes und dem Beginn des tatsächlichen Beladens des Energiespeichers kann hier somit ein Zeitraum liegen, in dem tatsächlich kein Laden des Energiespeichers erfolgt. Die tatsächliche Startzeit kann von einem Bediener vorgegeben werden. Auf diese Weise ist es möglich, Zeiten für den Ladevorgang auszuwählen, zu denen elektrische Energie, insbesondere an der externen Ladequelle, zuverlässig ausreichend zur Verfügung steht. Auf Baustellen insbesondere zu Zeiten, in denen gerade kein oder nur vergleichsweise wenig Arbeiten erfolgen, wie beispielsweise häufig nachts und/oder am Wochenende. Erfahrene Bediener können diesen Modus zudem nutzen, um ein Erreichen einer vollständigen Beladung des Energiespeichers zu einem ungefähren Zeitpunkt sicherzustellen. Auf diese Weise können Betriebsintervalle, in denen der Energiespeicher maximal geladen ist und gehalten werden muss, reduziert werden.

Noch genauer gelingt dies mit dem weiteren Lademodus "Laden nach definierter Zielzeit". Der Kernvorteil dieses Lademodus liegt darin, dass der Ladevorgang zu einer vorgegebenen Zeit beendet wird, insbesondere zu bzw. mit einem vorgegebenen Ladezustand des Energiespeichers, insbesondere einem vollständig geladenen Energiespeicher. Auf diese Weise können Betriebsintervalle, in denen der Energiespeicher maximal geladen ist und gehalten werden muss, auf ein Minimum reduziert werden. Die Ladesteuerung umfasst in diesem Ausführungsbeispiel eine Prognosefunktion, so dass sie unter Berücksichtigung einer aktuell verfügbaren Ladeleistung und in Kenntnis des aktuellen SOC des Energiespeichers mittels eines geeigneten Algorithmus prognostizieren kann, wie lange es dauern wird, das gewünschte Ladeziel, beispielsweise ein vollbeladener Energiespeicher, zu erreichen. Das Laden kann dann beginnen, wenn dieser berechnete Zeitraum zur Zielzeit enden wird. Da Stromnetze und Stromverfügbarkeiten Schwankungen unterliegen können, kann es insbesondere für diesen Lademodus vorgesehen sein, dass ein Offset-Zeitfenster in die Prognosefunktion mit einfließt. Um dieses Offset-Zeitfenster wird der berechnete Zeitraum ergänzt, so dass auch trotz vorrübergehender Minderverfügbarkeiten an elektrischer Energie im Ladezeitraum die gewünschte Beladung des Energiespeichers zur Zielzeit vergleichsweise zuverlässig erreicht wird. Das Offset-Zeitfenster kann dabei dynamisch an den Umfang der erforderlichen Beladung des Energiespeichers angepasst werden. Soll der Energiespeicher beispielsweise mit nur vergleichsweise wenig elektrischer Energie geladen werden, beispielsweise weil sein SOC zum Ladebeginn schon verhältnismäßig hoch ist, reicht aufgrund der dann vergleichsweise kurzen erforderlichen Ladezeit ein kürzeres Offset-Zeitfenster im Vergleich zu eine Ladevorgang, in dem vergleichsweise viel elektrische Energie in den Energiespeicher der Baumaschine eingespeist werden soll, was vergleichsweise lange Ladezeiten erfordert und damit sinnvollerweise ein längeres Offset-Zeitfenster bedingt.

Strompreise können in vielen Ländern tageszeitabhängig variieren. Häufig ist in der Nacht bezogener Strom gegenüber tagsüber bezogenem Strom deutlich günstiger. Zur Entlastung von Verfügbarkeitsspitzen, die aufgrund des immer größer werdenden Anteils erneuerbarer Energien am verfügbaren Strommix insbesondere auch tagsüber auftreten, wünschen Stromnetzbetreiber zudem teilweise insbesondere die Nutzung von Nachtzeiten zu Aufladezwecken. Hierfür kann ein Lademodus "nachhaltiges Laden" vorgesehen sein, der sich dadurch auszeichnet, dass der Ladevorgang zu einem Zeitpunkt gestartet wird, in dem an der Ladequelle aus nachhaltiger Stromerzeugung gewonnene elektrische Energie und/oder zu einem Nachttarif beziehbare elektrische Energie verfügbar ist. Die dafür erforderlichen Informationen über die "Art" des aktuell verfügbaren Stroms können von einem Betreiber eines Stromnetzes bereitgestellt und beispielsweise an die Ladequelle kommuniziert werden und/oder vertraglich festgelegt sein. Die Ladesteuerung kann dazu ausgebildet sein, diese Informationen zu beziehen (im Fall vertraglicher Festlegungen beispielsweise durch Vorabeingaben eines Bedieners) und zu berücksichtigen. Ferner kann auch für diesen Lademodus eine Prognosefunktion, insbesondere wie vorstehendbeschrieben, mit eingebunden sein. Dies ist insbesondere dann wichtig, wenn die für ein "nachhaltiges Laden" verfügbaren Zeiträume (voraussichtlich) nicht ausreichend sind, den gewünschten Ladezustand innerhalb eines festgelegten Zeitraums und/oder bis zu einem festgelegten Zeitpunkt zu erreichen. Die Ladesteuerung steuert den Ladevorgang dann vorzugsweise derart, dass der für ein nachhaltiges Laden verfügbare Zeitraum maximal ausgenutzt wird und die übrige erforderliche Energie aus anderen Zeiträumen, wenn möglich zeitlich nach dem Zeitraum, in dem nachhaltiges Laden möglich ist, ergänzt wird.

Bei dem verwendeten Energiespeicher handelt es sich offensichtlich um einen wiederaufladbaren Energiespeicher. Solche Energiespeicher altern mit jedem Ladezyklus. Darüber hinaus können sich allerdings auch bestimmte Ladebedingungen negativ auf die Haltbarkeit des Energiespeichers auswirken. Der Lademodus "batterieschonendes Laden" sieht nun vor, dass der Ladevorgang optimiert auf Eigenschaften des elektrischen Energiespeichers hin erfolgt, insbesondere um diesen hinsichtlich seiner Haltbarkeit möglichst zu schonen. Dies kann beispielsweise die Überwachung und Steuerung auf den jeweiligen Energiespeicher optimierter Ladeleistungen oder Ladeleistungsbereiche, eine zum Laden gleichzeitige Temperaturüberwachung, insbesondere ergänzt um eine steuerbare aktive Kühlung und/oder Erwärmung der Energiespeichers, um ein Laden bei einer optimalen Temperatur oder innerhalb eines optimalen Temperaturbereiches, etc. umfassen. Optimale Ladebedingungen können beispielsweise vom Hersteller des Energiespeichers zur Verfügung gestellt werden und/oder empirisch ermittelt werden.

Ein weiterer bevorzugter Lademodus ist der Lademodus "mehrstufiges Laden". Für diesen Lademodus charakterisierend ist, dass die Ladephase in wenigstens zwei Ladestufen unterteilt ist, wobei die Ladestufen aufeinanderfolgend zeitlich nacheinander zu erreichen sind und bei zueinander verschiedenen Ladezuständen des Energiespeichers beginnen. Eine Ladestufe bezeichnet somit einen SOC des Energiespeichers. Der Lademodus "mehrstufiges Laden" ermöglicht es nun, verschiedene Vorteile, beispielsweise der vorhergehenden Lademodi, miteinander zu verbinden und auf diese Weise einen optimalen Kompromiss zu erhalten. So kann es beispielsweise vorgesehen sein, dass in einer ersten Ladestufe der Energiespeicher günstig im Lademodus "nachhaltiges Laden" bis zu einem ersten SOC, beispielsweise 80%, geladen wird. Anschließend, auch mit einer längeren Unterbrechung, wird der Energiespeicher im Lademodus "Laden mit definierter Zielzeit" auf ca. 100% geladen, um zu einem gewünschten Zeitpunkt vollständig geladen zu sein. Die Ladesteuerung kann derart ausgebildet sein, dass beim mehrstufigen Laden bestimmte Lademoduskombinationen vorab definiert sind oder von einem Bediener individuell zusammengestellt und definiert werden können.

Ein Lademodus "personalisiertes Laden" zeichnet sich schließlich dadurch aus, dass mehr als ein Ladeparameter von einem Bediener vorgebbar ist. Beispielsweise kann der Bediener hier wenigstens zwei der Parameter "Dauer eines Offsets, "Ladezeitbeginn", "Ladezeitende" nach eigenen Vorstellungen vorab definieren. Dieser Lademodus gibt dem Bediener die größten Handlungsfreiheiten, setzt allerdings auch einen vergleichsweise erfahrenen Bediener voraus. Insbesondere für diesen Lademodus ist es somit bevorzugt, wenn dieser von einem Benutzerprofil mit entsprechender Berechtigung abhängig gemacht wird und auf diese Weise zunächst von einem Vorgesetzten oder Vergleichbarem freigeschaltet werden muss. Unabhängig von diesem konkreten Lademodus kann es zudem auch vorgesehen sein, dass bestimmte Lademodi-Kombinationen bestimmten Benutzerprofilen zugeordnet werden.

Im Schritt b) kann ein Nachweisen einer Benutzerberechtigung vor dem grundsätzlichen Auswählen eines Lademodus erforderlich sein und demnach zum Freischalten eines Ladevorgangs erfolgen. Eine solche Berechtigung kann über eine Code-Eingabe ("PIN") oder ähnliches erfolgen. Es kann ein Eingeben über ein Mobilteil mit APP, eine Identifikation an der externen Ladestation oder am Display eine Eingabeeinrichtung an der Maschine vorgesehen sein.

Für das Steuern des Ladevorgangs, insbesondere gemäß den vorstehend genannten Lademodi, kann es vorgesehen sein, dass die Ladesteuerung bei der Steuerung des jeweiligen Ladevorgangs Daten des Energiespeichers berücksichtigt, beispielsweise die aktuelle Temperatursituation des Energiespeichers, das Alter, den Ladezustand, die Ladeverteilung, sofern der Energiespeicher mehrere Speichersektionen umfasst, etc.

Insbesondere dann, wenn im Schritt c) ein Überwachen der Temperatur des Energiespeichers erfolgt, kann es vorgesehen sein, dass ein gegenüber dem ausgewählten Lademodus priorisiertes Reduzieren der Ladeleistung dann erfolgt, wenn die Temperatur des Energiespeichers eine Temperaturschwelle überschreitet. Die Ladesteuerung ist dann somit nicht derart ausgebildet, dass der ausgewählte Lademodus mehr oder weniger blind abgearbeitet wird, sondern dies zu den vom Lademodus vorgegebenen Bedingungen nur so lange fortgesetzt wird, solange die Temperatur des Energiespeichers eine definierte Temperaturschwelle nicht über- oder unterschreitet bzw. nicht außerhalb eines definierten Temperaturbereiches liegt. Kommt es zu einem Über- und Unterschreiten der jeweiligen Temperaturschwelle oder einem Verlassen des Temperaturbereiches, greift die Ladesteuerung in den Ladevorgang mit Maßnahmen ein, die die Temperatur des Energiespeichers wieder in den gewünschten Bereich bringen, beispielsweise durch aktive Kühl- oder Wärmprozesse oder durch ein Unterbrechen des Ladevorgangs oder ähnliches. Sofern bestimmte Zielzeiten im aktuell ausgewählten Lademodus vorhanden sind, kann es im Fall des vorstehend beschriebenen Eingreifens der Ladesteuerung in den Ladevorgang vorgesehen sein, dass die Ladesteuerung eine Kompensationsfunktion aufweist, die derart ausgebildet ist, dass bei einer Wiederaufnahme des Ladevorgangs unter Umständen verloren Zeiträume zum Laden des Energiespeichers wieder aufgeholt und damit in Bezug auf die definierte Zielzeit kompensiert werden.

Das Beenden des Ladevorgangs gemäß Schritt d) kann ebenfalls verschiedene Weiterbildungen umfassen, wobei dies auch teilweise vom jeweils ausgewählten Lademodus definiert sein kann. Beispielsweise ist es möglich, dass das Beenden beim Erreichen eines vorgegebenen Ladezustandes erfolgt, also beispielsweise bei einem SOC von 100%. Alternativ kann es auch vorgesehen sein, dass das Beenden zeitabhängig erfolgt, der Ladevorgang mit anderen Worten zu einem vorher festgelegten Zeitpunkt oder nach dem Ablauf eines vorher definierten Zeitraums abgeschlossen wird. Weiter ist es in diesem Zusammenhang auch möglich, dass das Beenden zeitabhängig erfolgt, wobei in Bezug auf eine vorgegebene Zielzeit ein Offset-Zeitfenster vorgesehen ist, welches die vorgegebene Sollzielzeit um das Offset-Zeitfenster vorverlegt. Grundsätzlich kann es für jegliche Formen des Beendens des Ladevorgangs vorgesehen sein, dass das Beenden des Ladevorgangs ein Anzeigen des Beendens mittels einer Signalisiereinrichtung umfasst. Dies kann über eine geeignete Signalisiereinrichtung erfolgen, beispielsweise akustisch, optisch, haptisch oder mittels einer Nachrichtenübermittlung an ein Mobildevice.

Der Schritt e) (Trennen) schließlich kann vorzugsweise ein zeitlich vorgelagertes Deaktivieren einer Maschinenfunktion, insbesondere ein Entriegeln einer Ladesteckerverriegelung, umfassen. Ergänzend oder alternativ kann ein Aktivieren einer Maschinenfunktion im Schritt e) vorgesehen sein und/oder ein zeitlich nachgelagertes Aktivieren einer Maschinenfunktion, insbesondere ein Freigeben eines Fahrantriebs und/oder eines Unwuchterregerantriebs.

Insbesondere in den Schritten a) (Verbinden) und/oder b) (Auswählen) und e) kann ferner ein optisch, akustisch und/oder haptisch von einem Bediener wahrnehmbares Signalisieren von der Baumaschine und/oder der externen Ladequelle erfolgen. Es ist zudem möglich, dass ein Verfolgen des Ladevorgangs, insbesondere von einem Mobildevice, einer zentralen Serverstation, an der externen Ladequelle und/oder an der Baumaschine selbst möglich ist, wozu geeignete Kommunikations- und Anzeigeeinrichtungen vorgesehen sein können.

Der Energiespeicher kann wenigstens zwei Speichersektionen umfassen, die getrennt zueinander elektrische Energie speichern. Diese Speichersektionen können baulich unabhängig zueinander als jeweils für sich ausgebildetes Modul vorliegen. Dies ermöglicht es, verfügbaren Bauraum in der Baumaschine optimal auszunutzen. Die Speichersektionen weisen jeweils einen eigenen aktuellen Ladestand (SOC) auf, wobei es erfindungsgemäß nun bevorzugt ist, wenn das Laden des Energiespeichers für den Fall, dass sich die Ladestände der beiden Speichersektionen zueinander unterscheiden, derart erfolgt, dass zunächst diejenige Speichersektion, die aktuell einen gegenüber der anderen Speichersektion niedrigeren Ladestand hat, zunächst auf den Ladestand der anderen Speichersektion geladen wird und erst anschließend beide Speichersektionen gemeinsam weiter geladen werden. Auf diese Weise können individuelle Beanspruchungen der Speichersektionen ausgeglichen und damit die Lebensdauer des Energiespeichers als Ganzes verbessert werden.

Es kann, wie vorstehend bereits erwähnt, vorgesehen sein, dass Informationen zum Ladevorgang und/oder Steuerbefehle zwischen der Baumaschine und der externen Ladequelle oder aber auch weiteren Einrichtungen, wie einem Mobildevice und/oder einer zentralen Serverstation, ausgetauscht werden. Hierfür kann eine geeignete Kommunikationseinrichtung mit einer Sendeeinrichtung und einer Empfangseinrichtung vorhanden sein, wobei die Sendeeinrichtung zur Übermittlung von Informationen zu einem oder mehreren der Verfahrensschritte gemäß den vorhergehenden Ansprüchen an die Empfangseinrichtung ausgebildet ist. Das Übermitteln dieser Informationen kann während einem oder mehreren der Schritte a) bis e) erfolgen. Der Informationsübermittlung kann kabelos oder kabelgebunden erfolgen. Es können Informationen an der Baumaschine, der externen Ladequelle oder aber auch an dem Mobildevice und/oder der zentralen Serverstation an geeigneten Anzeigeeinrichtungen angezeigt werden.

Das Kommunizieren kann auch bidirektional zwischen einem maschinenseitigen Kommunikationsteil der Kommunikationseinrichtung und einem externen Kommunikationsteil der Kommunikationseinrichtung erfolgen, wobei insbesondere ein Übermitteln von Steuervorgaben zu wenigstens einem der Schritte b) und d) von dem externen Kommunikationsteil zum maschinenseitigen Teil der Kommunikationseinrichtung erfolgen kann.

Insbesondere wenn mehrere Maschinen mit einem elektrischen Energiespeicher auf einer Baustelle betrieben werden, kann es vorkommen, dass die Energiespeicher mehrere Baumaschinen mit elektrischer Energie geladen werden sollen. Für den Fall, dass ein Laden von mehreren, gleichzeitig mit einer, insbesondere derselben, externen Ladequelle verbundenen Maschinen abläuft, kann es vorgesehen sein, dass ein Überwachen und Koordinieren der einzelnen Ladevorgänge der mehreren Maschinen mithilfe einer den einzelnen Ladesteuerungen hierarchisch übergeordneten Überwachungsladesteuerung erfolgt. Diese Überwachungsladesteuerung erkennt somit zumindest, ob gleichzeitig mehr als eine Baumaschine an die externe Ladequelle angeschlossen und zu Laden ist und koordinierte entsprechend die Ladevorgänge. Alternativ kann mithilfe eines Ladeabstimmungsprozesses zwischen allen Ladesteuerungen der gleichzeitig mit der externen Ladequelle verbundenen Maschinen ein Koordinieren der Ladevorgänge erfolgen. In diesem Fall kommunizieren die einzelnen Baumaschinen somit untereinander, beispielsweise über ein eigenes Funknetz oder ähnliches. Dies ermöglicht eine besonders effektive Ausnutzung der externen Ladequelle und kann wirksam einer möglichen Überlastung vorbeugen.

Die externe Ladequelle kann elektrische Energie beispielsweise aus einem öffentlichen Stromnetz, einer Photovoltaikanlage, einem Energiespeicher für elektrische Energie oder von einem Generator beziehen.

Für das erfindungsgemäße Verfahren kann es vorgesehen sein, dass ein Erzeugen und Übermitteln von Statusmeldungen, insbesondere einem Ladeverlauf, Störmeldungen etc., und/oder ein Dokumentieren derselben erfolgt. Dies kann beispielsweise in Echtzeit erfolgen, durch eine geeignete Anzeige oder insbesondere auch mittels einer geeigneten App. Zu Dokumentationszwecken ist es bevorzugt, wenn ein Speichern in einem Datenspeicher auf einem an der Baumaschine, an der externen Ladequelle, dem Mobildevice und/oder über eine entfernt zum Mobilteil angeordnete Speichereinrichtung mithilfe einer kabellosen Datenübertragungsverbindung, insbesondere mithilfe von Cloud Computing, erfolgt. Cloud Computing an sich ist bekannt und bezeichnet konkret die Bereitstellung einer IT-Infrastruktur über das Internet. Dazu kann die IT-Infrastruktur beispielsweise funktionale Komponenten wie Speicherplatz, Rechenleistung oder Anwendungssoftware umfassen.

Das Verfahren kann ferner, insbesondere in den Schritten a), b), d) und e) ein Anleiten des Benutzers, mit umfassen, beispielsweise mittels einer geeigneten Menüführung. Auch dies kann insbesondere Teil einer App und/oder an einer Anzeigeeinrichtung an der Baumaschine angezeigt werden.

Schließlich kann die Baumaschine einen Batterietrennschalter umfassen. Ist dieser aktiviert, ist die Baumaschine praktisch spannungsfrei. Ist er deaktiviert, ist die Baumaschine dagegen betriebsbereit. Die Ladesteuerung kann nun so ausgebildet sein, dass das Laden nur bei deaktiviertem Batterietrennschalter (d.h. geschlossener Stromversorgung zum Betriebssystem der Maschine) möglich ist. Es ist allerdings auch denkbar, dass die Baumaschine neben einem Batterietrennschalter einen weiteren Ladeschalter aufweist. Dieser ermöglicht, dass bei aktiviertem Batterietrennschalter speziell für den Ladevorgang, sofern der Ladeschalter in seiner Ladeposition ist, im Wesentlichen nur eine Stromversorgung des Energiespeichers möglich ist, insbesondere der Fahrantrieb und gegebenenfalls der Antrieb weiterer Arbeitseinrichtungen spannungsfrei ist. Der Ladeschalter schließt somit eine Art Bypass-Stromkreis, der unabhängig von der übrigen Maschine, allein der Bereitstellung einer stromleitenden Verbindung von der externen Ladequelle (bzw. einem entsprechenden Stecker) zum Energiespeicher dient. Sofern die Ladesteuerung an der Baumaschine angeordnet ist und/oder Sensordaten während des Ladevorgangs an der Baumaschine gewonnen werden sollen, kann der Bypass-Stromkreis auch zur Versorgung dieser Elemente, ggf. auch unter Einbindung eines Anzeigedisplays, insbesondere Touchscreens, ausgebildet sein.

Neben einem Verfahren betrifft die Erfindung auch eine selbstfahrende Baumaschine, insbesondere Bodenverdichtungsmaschine, und externe Ladequelle. Vorrichtungsmerkmale, sofern sie zum erfindungsgemäßen Verfahren offenbart wurden, beziehen sich auch auf das erfindungsgemäße System aus Baumaschine und externer Ladequelle.

Die erfindungsgemäße Baumaschine umfasst einen wiederaufladbaren Energiespeicher zur Speicherung von elektrischer Energie und einen Elektromotor, der aus dem Energiespeicher mit elektrischer Energie versorgt wird. Ferner ist eine Ladesteuerung vorhanden, die derart ausgebildet ist, dass sie den Ladevorgang des Energiespeichers mit elektrischer Energie aus der externen Ladequelle steuert. Die Baumaschine, die externe Ladequelle und die Ladesteuerung zusammen sind erfindungsgemäß zum Durchführen des erfindungsgemäßen Verfahrens ausgebildet.

Bei der Baumaschine kann es sich insbesondere um eine Bodenverdichtungsmaschine, insbesondere eine Tandemwalze, ganz besonders eine Aufsitztandemwalze, eine Grabenwalze, eine handgeführte Walze, einen Müllverdichter, eine Rüttelplatte, einen Stampfer, eine Straßenfräse, einen Recycler, einen Stabilisierer, einen Straßenfertiger oder einen Beschicker handeln. Solche Baumaschinen mit ihren wesentlichen Funktionen sind im Stand der Technik bekannt und teilweise beispielsweise in wenigstens einem der Dokumente DE102012015888A1, DE102012017337A1, DE102013005991A1, DE102013004948A1, DE102015009085A1, DE102010046401A1, DE102010014902A1 und DE102013016127A1 beschrieben. Viele dieser Maschinen sind selbstfahrend. Alle dieser Maschinen weisen eine mit dem Bodenuntergrund in Kontakt stehende Einrichtung auf, die insbesondere eine Fahreinrichtung, wie beispielsweise eine Bandage, ein Rad oder ein Kettenlaufwerk, und teilweise auch gleichzeitig eine Arbeitseinrichtung sein kann, wie es bei den selbstfahrenden Bodenverdichtungsmaschinen, insbesondere Walzen, der Fall ist.

Die Baumaschinen weisen üblicherweise einen Maschinenrahmen auf, der die wesentliche Tragstruktur der Maschine darstellt. Der Maschinenrahmen kann eingliedrig oder auch mehrgliedrig, insbesondere zweigliedrig mit einem Vorderrahmen und mit einem Hinterrahmen, ausgebildet sind. Der Vorderrahmen kann mit dem Hinterrahmen über ein Knickgelenk, insbesondere Knickpendelgelenk, verbunden sein, so dass dann Lenkbewegungen der Baumaschine über eine, üblicherweise von einem Lenkantrieb angetriebene, Relativverstellung des Hinterrahmens gegenüber dem Vorderrahmen erreicht werden. Diese Rahmenstruktur ist insbesondere bei Walzen vorteilhaft.

Die erfindungsgemäßen Vorteile treten dann besonders deutlich zu Tage, wenn es sich bei der Baumaschine um eine, insbesondere fernsteuerbare, Grabenwalze oder eine Tandemwalze, insbesondere eine sogenannte Aufsitztandemwalze oder "leichte" Tandemwalze, handelt. Leichte Tandemwalzen bezeichnen Walzen mit einem Gesamtmaschinengewicht (exklusive Betriebsflüssigkeiten) von < 5 t. Sie weisen vorzugsweise einen knickgelenkten Maschinenrahmen auf und der Fahrersitz ist idealerweise am Hinterwagen angeordnet. Solche Walzen werden häufig im Rahmen von Kleinbaustellen verwendet, so dass ihre tägliche Betriebsdauer im Vergleich zu Großmaschinen häufig verhältnismäßig kurz ist.

Es ist vorteilhaft, wenn der Energiespeicher am Vorderrahmen (sofern vorhanden), insbesondere eine Tandemwalze, angeordnet ist und wenigstens teilweise von einer Haube überdeckt ist. Diese Haube kann öffenbar ausgebildet sein, um einen direkten Zugriff von außerhalb der Maschine bei geöffneter Haube, beispielsweise zu Wartungszwecken, zu ermöglichen. Gleichzeitig bietet die Haube, insbesondere im geschlossenen Zustand, eine mechanische Schutzbarriere für den Energiespeicher zur Au-ßenumgebung hin. Vorzugsweise im Vorderrahmen in Vertikalrichtung unterhalb der Haube kann eine Ladeverbindungsdurchgangsöffnung, insbesondere Ladesteckerdurchgangsöffnung, vorhanden sein, in die ein mit der Ladequelle in Verbindung stehender Ladestecker oder durch die hindurch ein Ladekabel der Baumaschine zur Herstellung einer Ladeverbindung zwischen dem Energiespeicher und der Ladequelle einsteckbar ist. Damit ist es zur Herstellung der Ladeverbindung nicht erforderlich, die Haube zu öffnen. Diese Öffnung kann durch den Maschinenrahmen hindurch verlaufen. Diese Öffnung kann ergänzend oder alternativ eine Verschlussklappe aufweisen. Es kann vorgesehen sein, dass ein Sensor vorhanden ist, der den aktuellen Schließzustand der Verschlussklappe, also eine die Öffnung freigebende und/oder eine die Öffnung verschließende Position überwacht. Die Verschlussklappe kann ein abschließbares Schloss umfassen. Diese spezielle Positionierung der Ladeverbindungsdurchgangsöffnung, inklusive der weiterbildenden Ausgestaltungen, stellt unabhängig von der Ausgestaltung der Ladesteuerung, auch in konstruktiver Hinsicht eine eigenständige Erfindung dar, kann bevorzugt allerdings auch mit der erfindungsgemäßen Ladesteuerung kombiniert werden.

Hinsichtlich konkreter Ausgestaltungsdetails der erfindungsgemäßen Baumaschine sind weiter bevorzugte Ausgestaltungen möglich und von der Erfindung mit umfasst. So ist es beispielsweise vorteilhaft, wenn die Ladesteuerung derart ausgebildet ist, dass sie AC- und DC-Laden ermöglicht. Ergänzend oder alternativ kann es vorgesehen sein, dass die Baumaschine eine Ladesteckerbuchse umfasst, die den baumaschinenseitigen Teil einer Ladestecker-Buchse-Verbindung der Ladeverbindung darstellt. Die Ladesteckerbuchse ist somit zur Aufnahme eines von der externen Ladequelle kommenden Ladesteckers vorgesehen. Es ist vorteilhaft, wenn die Ladesteckerbuchse für sich, beispielsweise mittels eines geeignete Abdeckung, gesichert ist. Hier kann ein mechanisch und/oder elektronisch betätigbares Schloss vorgesehen sein. Auch eine Schlosssteuerung mittels einer App ist möglich. Ergänzend oder alternativ kann vorgesehen sein, dass die Baumaschine ein fest mit ihr verbundenes Ladekabel umfasst, um zum Laden des Energiespeichers zur Herstellung einer Ladeverbindung auch Ladebuchsen einer externen Ladequelle bedienen zu können. Weiter ergänzend oder alternativ ist es vorteilhaft, wenn ein vorhandener Wassertank an demjenigen Rahmenteil von, wenn vorhanden, Vorder- und Hinterrahmen angeordnet ist, an dem der Energiespeicher nicht gelagert ist. Mit anderen Worten: Der Wassertank und der Energiespeicher sind bevorzugt getrennt voneinander am Vorderwagen und am Hinterwagen positioniert. Grundsätzlich ist es unabhängig von den vorstehend genannten Ausführungen, wenngleich damit kombinierbar, vorteilhaft, wenn der Energiespeicher als Ganzes schwingungsentkoppelt gegenüber zumindest dem Maschinenrahmen gelagert ist, beispielsweise auf einem über Dämpfungselemente am Maschinenrahmen gelagerten Tragrahmen für den Energiespeicher. Umfasst der Energiespeicher mehrere Speichersektionen, kann es vorteilhaft sein, wenn die einzelnen Speichersektionen individuell jeweils für sich und unabhängig voneinander schwingungsgedämpft gegenüber dem Maschinenrahmen gelagert sind. Es ist weiter ergänzend oder alternativ möglich, dass Eingaben für die Ladesteuerung über eine manuell betätigbare Eingabeeinrichtung möglich sind, beispielsweise einen Touchscreen an Maschine oder auch über ein Mobildevice, insbesondere ein Tablet oder ein Smartphone. Es versteht sich, dass im Fall mobiler Eingabeeinrichtungen eine geeignete Kommunikationsverbindung (WLAN, Bluetooth etc.) mit entsprechenden Kommunikationseinrichtungen (Sender, Empfänger) vorhanden sein muss.

Das konkrete Antriebskonzept der erfindungsgemäßen Baumaschine kann variieren. Bevorzugt ist es, wenn ein von dem Energiespeicher mit elektrischer Energie versorgter Elektromotor als Primärantriebsaggregat der Baumaschine vorhanden ist. Insbesondere wird bevorzugt auf einen Verbrennungsmotor komplett verzichtet. Grundsätzlich kann auf vollelektrische Antriebssysteme, sowohl für einen Fahrantrieb als auch für den Antrieb einer oder mehrerer Arbeitseinrichtungen, zurückgegriffen werden, wobei sich vorliegend ein elektrohydraulisches Mischkonzept als vorteilhaft erwiesen hat. Hierzu kann es vorgesehen sein, dass der aus dem Energiespeicher mit elektrischer Energie versorgte Elektromotor eine hydraulische Fahrantriebspumpe und/oder eine hydraulische Erregerantriebspumpe antreibt. Dieses elektrohydraulische Antriebskonzept bringt unter anderem den Vorteil mit sich, dass Vibrationsbelastungen am Elektromotor deutlich reduziert werden können. Die Baumaschine kann mit dem einen Elektromotor auch gleichzeitig mehr als eine Hydraulikpumpe antreiben, wobei dann die einzelnen Hydraulikpumpen beispielsweise über ein geeignetes Pumpenverteilergetriebe an den Hydraulikmotor angeschlossen sein können und/oder als Konstant- oder als Verstellpumpen ausgebildet sein können. Ergänzend oder alternativ ist es auch im Rahmen der Erfindung möglich, dass die Baumaschine wenigstens zwei Elektromotoren umfasst, wobei der eine Elektromotor den Fahrantrieb und der andere Elektromotor den Antrieb einer Arbeitseinrichtung, bei einer Walze beispielsweise den Erregerantrieb eines Unwuchterregers, antreibt. Dabei ist es möglich, dass der Fahrantrieb und/oder der Antrieb der Arbeitseinrichtung direkt von dem Elektromotor angetrieben werden und somit ein Direktantrieb vorliegt. Es kann aber auch vorgesehen sein, dass jeweils ein elektrohydraulischer Antriebsstrang, d.h. mit elektromotorischem Antrieb einer Hydraulikpumpe, die wiederum über einen geeigneten Hydraulikkreislauf einen Fahrhydraulikmotor oder einen Hydraulikmotor einer Arbeitseinrichtung antreibt. Auch Mischformen zwischen elektrischem Direktantrieb und einem elektrohydraulischen Antrieb sind möglich. Die Trennung der Antriebe für einen Fahrmotor und eine Arbeitseinrichtung, beispielsweise einen Unwuchterreger, hat den Vorteil, dass beispielsweise Schleppverluste reduziert werden können.

Es sind im Stand der Technik teilweise und vollständig autonom fahrende Baumaschinen bekannt. Speziell für diese Baumaschinen kann es vorgesehen sein, dass der Ladevorgang selbst in dieses Autonomiekonzept mit integriert wird. So kann es beispielsweise vorgesehen sein, dass eine autonom fahrende Baumaschine von selbst zur externen Ladequelle fährt. Darüber hinaus ist es auch möglich, dass die Baumaschine im Zusammenwirken mit der externen Ladequelle selbst bzw. autonom die Ladeverbindung herstellt und nach dem Ladevorgang auch wieder trennt. Selbst die Auswahl des optimalen Lademodus kann autonom erfolgen, beispielsweise in Abhängigkeit von Tageszeiten. Es ist zudem möglich, dass die Ladesteuerung hierzu beispielsweise ein Al-Modul (*artificial intelligence*) umfassen kann, dass geeignete Algorithmen umfasst, um einen nach definierten Kriterien zu bestimmenden, für die jeweilige Arbeitssituation optimalen Lademodus autonom auszuwählen.

Die Erfindung wird nachstehend anhand der in den Figuren gezeigten Ausführungsbeispiele näher erläutert. Es zeigen schematisch:
- Fig. 1:: eine als Tandemwalze mit Schemellenkung ausgebildete Bodenverdichtungsmaschine;
- Fig. 2:: eine als Walzenzug ausgebildete Bodenverdichtungsmaschine;
- Fig. 3:: eine als Tandemwalze mit Knicklenkung ausgebildete Bodenverdichtungsmaschine;
- Fig. 4:: eine als Grabenwalze ausgebildete Bodenverdichtungsmaschine;
- Fig. 5:: eine als Rüttelplatte ausgebildete Bodenverdichtungsmaschine;
- Fig. 6:: eine als Vibrationsstampfer ausgebildete Bodenverdichtungsmaschine;
- Fig. 7A bis D:: graphische Darstellung verschiedener Lademodi mit dem Ladezustand (SOC) abhängig von der Zeit (t);
- Fig. 8:: ein Ablaufdiagramm eines erfindungsgemäßen Verfahrens; und
- Fig. 9:: Aufbaualternativen eines Antriebsstrangs der Baumaschine.

Gleiche oder gleichwirkende Bauteile sind in den Figuren mit den gleichen Bezugsziffern bezeichnet. Sich wiederholende Bauteile sind nicht in jeder Figur gesondert bezeichnet.

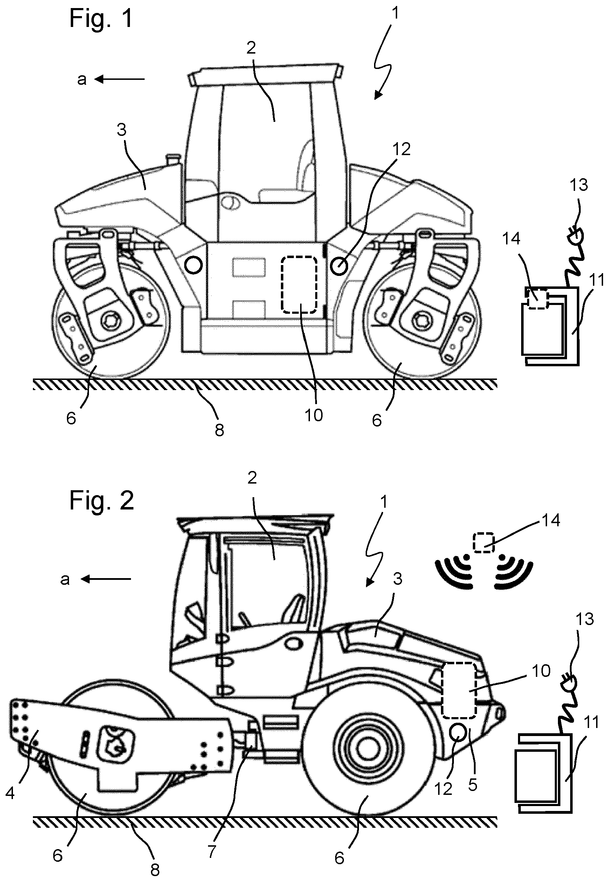

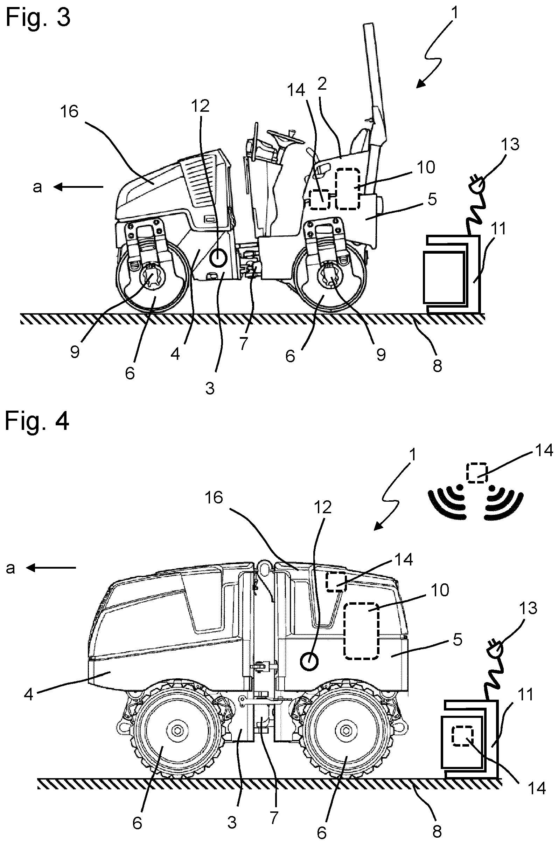

Die Figuren 1 bis 6 zeigen verschiedene erfindungsgemäße Baumaschinen 1, wobei in diesen Figuren beispielhaft speziell Bodenverdichtungsmaschinen dargestellt sind. Bei den Bodenverdichtungsmaschinen in den Figuren 1 bis 4 handelt es sich um die vorliegend bevorzugten selbstfahrenden Baumaschinen 1, in Figur 1 um eine Tandemwalze, in Figur 2 um einen Walzenzug, in Figur 3 um eine Gummiradwalze und in Figur 4 um eine Grabenwalze. Insbesondere auch die Grabenwalze kann ferngesteuert oder autonom fahrend ausgebildet sein. Diese Baumaschinen 1 sind von ihrem Grundaufbau her im Stand der Technik hinsichtlich ihrer Fahr- und Arbeitseinrichtungen bekannt. So umfassen die Baumaschinen 1 jeweils einen Maschinenrahmen 3 und Fahreinrichtungen 6, die teilweise als Walzenbandagen Räder ausgebildet sind. Mit den Fahreinrichtungen 6 bewegen sich die Baumaschinen vom Typ Bodenverdichtungsmaschine im Arbeitsbetrieb in oder entgegen der Vorwärtsrichtung a über einen Boden 8, der verdichtet werden soll. Die Bodenverdichtungsmaschinen 1 der Figuren 1-3 weisen ebenfalls einen Fahrstand 2 auf, in dem sich ein Bediener zur Steuerung der Bodenverdichtungsmaschine 1 aufhalten kann. Diese kann offen, mit einem Schutzdach oder auch als Kabine ausgebildet sein. Die Grabenwalze der Figur 4 dagegen weist keinen Fahrerstand 2 auf, da es sich hierbei um ein ferngesteuertes Gerät handelt. Der Maschinenrahmen 3 kann mehr-gliedrig, insbesondere zweigliedrig mit einem Vorderrahmen 4 und einem Hinterrahmen 5, ausgebildet sein, wobei die Rahmenteile über ein Knickgelenk 7 miteinander verbunden sein können.

Zum Antrieb der Fahreinrichtungen 6 und damit für die Fortbewegung der Bodenverdichtungsmaschinen 1 können an den Fahreinrichtungen 6 Fahrantriebe 9 vorgesehen sein (beispielhaft nur in der Fig. 3 angegeben, wobei dies für alle der in den Figuren 1 bis 4 gezeigten Bodenverdichtungsmaschinen der Fall sein kann). Diese Fahrantriebe 9 können Elektromotoren oder Hydraulikmotoren sein. Ferner können weitere Antriebe vorhanden sein, beispielsweise für in den Walzbandagen angeordnete Unwuchterreger, Lenkantriebe, sonstige Arbeitseinrichtungen etc. (in den Figuren nicht gezeigt).

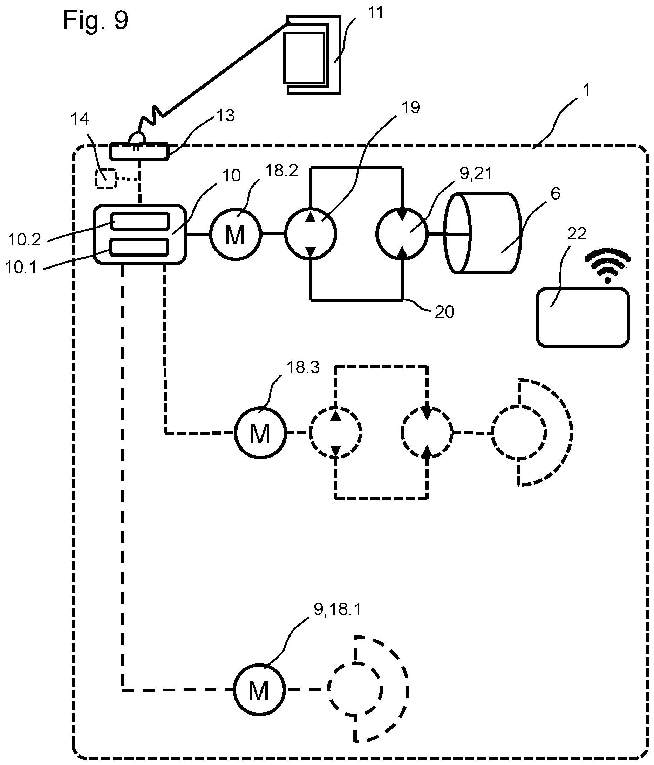

Es kann sich somit bei den Fahrantrieben 9, dem Lenkantrieb, beim Vibrationsantrieb und bei den sonstigen Antrieben für Arbeitseinrichtungen um hydraulische Antriebe, beispielsweise Hydraulikmotoren, die von einer an anderer Stelle der Bodenverdichtungsmaschine angeordneten Hydraulikpumpe betrieben werden, handeln. Für die Erfindung ist es nun allerdings vorgesehen, dass wenigstens eine, insbesondere alle der Hydraulikpumpen von wenigstens einem elektrischen Motor angetrieben werden. Auch ein vollelektrisches und damit verbrennungsmotorfreies Antriebskonzept ist von der Erfindung mit umfasst. Einzelheiten zu konkreten Antriebssträngen sind insbesondere in der nachfolgenden Figur 9 näher erläutert. Teil der Baumaschinen 1 ist daher ein Energiespeicher 10 zur Speicherung von elektrischer Energie, die zum Antrieb des Elektromotors nutzbar ist. Der Energiespeicher 10 steht in einer stromleitenden Verbindung mit dem Elektromotor, was in den Figuren nicht näher angegeben ist.

Die im Energiespeicher 10 gespeicherte elektrische Energie wird im laufenden Arbeitsbetrieb der Baumaschine 1 verbraucht. Um den Energiespeicher wieder mit elektrischer Energie aufladen zu können, kann die Baumaschine an eine externe Ladequelle 11, beispielsweise einen öffentlichen Ladepunkt, wie ein mit einem öffentlichen Stromnetz verbundene Ladesäule, einen Generator, einen PV-Anlage etc., angeschlossen werden. Hierzu ist an der Baumaschine jeweils eine Anschlussmöglichkeit zur Verbindung der Baumaschine bzw. des Energiespeichers derselben mit der Ladequelle 11 vorhanden. Hierzu kann beispielsweise eine Ladebuchse üblicher und bekannter Bauart vorgesehen sein. Die Ladebuchse kann in einer Ladesteckerdurchgangsöffnung 12 positioniert sein oder durch eine Ladesteckerdurchgangsöffnung 12 hindurch von außerhalb der Baumaschine zugänglich sein. Auf Seiten der Ladequelle 11 kann ein Ladestecker 13 vorgesehen sein. Ferner ist eine Ladesteuerung 14 vorhanden. Diese kann Teil der Ladequelle 11 (Fig. 1), extern (beispielsweise mittels externer Serverstation und/oder Mobildevice) mit der Baumaschine 1 und/oder der Ladequelle 11 kommunizierend (Fig. 2), Teil der Baumaschine 1 (Fig. 3) sein oder auf die Baumaschine 1, die Ladequelle 11 und/oder extern verteilt sein.

Die Baumaschinen 1 können eine Haube 16 aufweisen, die beispielsweise den Energiespeicher 10 und/oder den Elektromotor überdeckt und zwischen einer geschlossenen Arbeitsposition und einer geöffneten Wartungsposition verstellbar ist. Es ist nun vorteilhaft, wenn die Ladesteckerdurchgangsöffnung 12 nicht von der Haube überdeckt an der Maschine positioniert ist, sondern von der Haube versetzt, insbesondere in Vertikalrichtung unterhalb der Haube 16. Ergänzend oder alternativ kann die Ladesteckerdurchgangsöffnung 12 im Maschinenrahmen 3 angeordnet sein, insbesondere den Maschinenrahmen 3 durchsetzend. Diese beiden konstruktiven Aspekte zur konkreten Anordnung der Ladesteckerdurchgangsöffnung 12 stellen unabhängig von der nachstehend noch näher beschriebenen Ladesteuerung bzw. dem Ladeverfahren eine eigenständige, wenngleich mit der Ladesteuerung bzw. dem Ladeverfahren kombinierbare Erfindung dar.

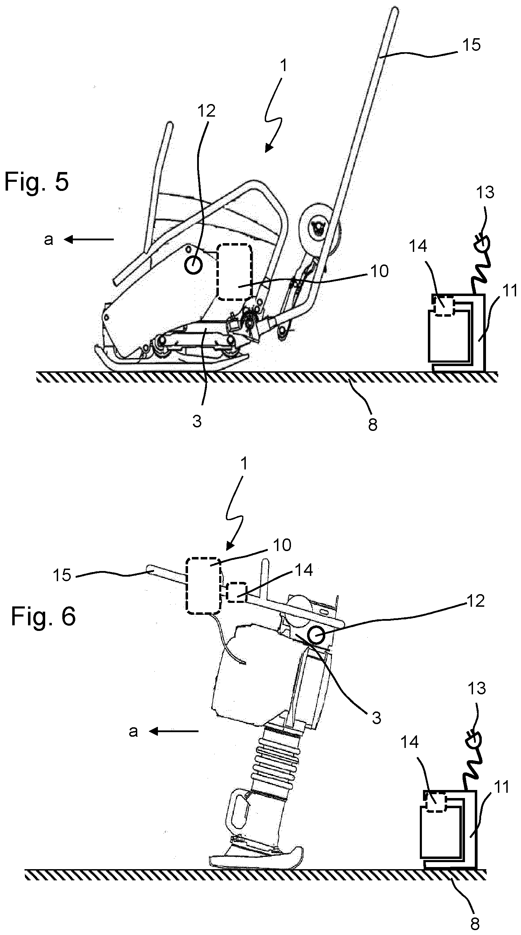

Die Figuren 5 und 6 zeigen dagegen handgeführte Baumaschinen 1, die keine klassische Fahreinrichtung 6 aufweisen, aber mittels einer Bodenkontaktplatte und einem geeigneten Antrieb (Fig. 5 Vibrationsplatte mit Unwuchterreger; Fig. 6 Stampfer mit Pleuel) über den Boden springen können. Auch diese Baumaschinen können Teil des erfindungsgemäßen Konzeptes sein. Die Führung dieser Maschinen erfolgt über einen Handbügel 15. Hinsichtlich der weiteren Elemente wird auf die vorstehenden Ausführungen Bezug genommen. Rein vorsorglich sei ergänzt, dass auch handgeführte Walze (dann mit Fahreinrichtungen) vorliegend mit umfasst sind.

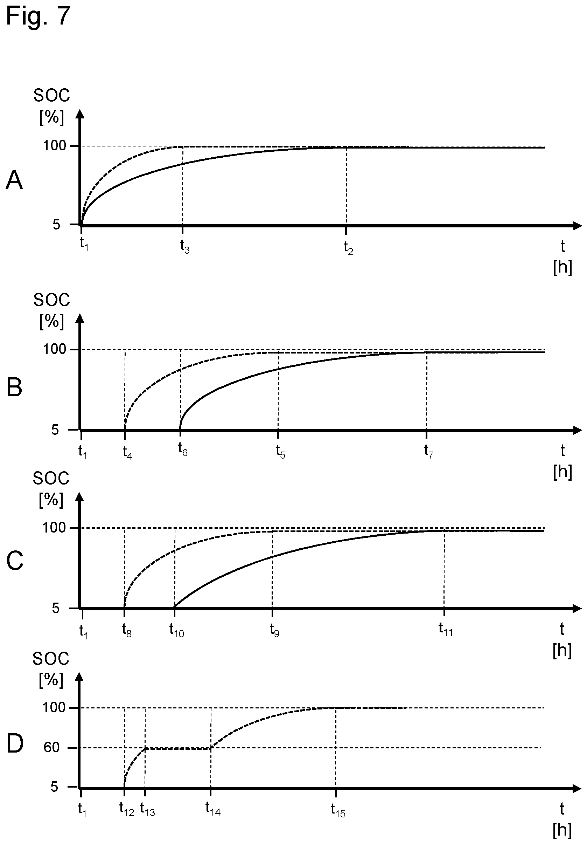

Die Ladesteuerung 14 ist nun derart ausgebildet, dass sie wenigstens zwei zueinander verschiedene Lademodi umfasst, aus denen ein Bediener oder eine Al-Steuerung wählen kann. Beispiele verschiedener Lademodi sind in den Figuren 7A bis 7D angegeben. Die Figuren zeigen dabei jeweils den Ladeverlauf des Ladezustandes (angegeben in *state of charge* bzw. SOC in % Beladung in Abhängigkeit von der Zeit t in Stunden) des an die Ladequelle angeschlossenen Energiespeichers der Baumaschine. Mit t₁ ist jeweils der durch die Ladesteuerung 14 gesteuerte Beginn des Ladevorgangs bezeichnet, wobei dies nicht bedeuten muss, dass mit diesem Zeitpunkt auch gleich ein Laden des Energiespeichers mit elektrischer Energie erfolgt. Ferner ist es insbesondere vorgesehen, dass zum Zeitpunkt t₁ bereits eine Ladungsverbindung zwischen der Baumaschine 1 und der Ladequelle 11 besteht. Dabei kann es insbesondere vorgesehen sein, dass der Zeitpunkt t₁ dann eintritt, wenn ein Herstellen einer Verbindung des Energiespeichers der Baumaschine mit der externen Ladequelle erfolgt (beispielsweise detektiert durch einen geeigneten Ladesteckersensor, beispielsweise einen Druckkontaktsensor), oder dann, wenn ein Lademodus (insbesondere bei bereits bestehender Ladeverbindung) aus den wenigstens zwei zur Verfügung stehenden Lademodi, ausgewählt worden ist. Auch eine separate Befehlseingabe zum Start des Ladevorgangs und damit zur Festlegung von t₁ kann vorgesehen sein, insbesondere nachdem eine Ladeverbindung hergestellt und/oder ein Lademodus ausgewählt worden ist. Die in den Figuren 7A bis 7D gezeigten Kurvenverläufe beziehen sich untereinander alle auf dieselbe Baumaschine. Offensichtlich können hier zwischen verschiedenen Baumaschine Unterschiede auftreten, insbesondere auch abhängig von der verfügbaren Speicherkapazität des Energiespeichers etc. Schließlich ist auch festzuhalten, dass die Kurvenverläufe beispielhaft zwischen SOC-Werten von 5% bis 100% verlaufen. Auch dies ist nur exemplarisch zu verstehen, so dass die Erfindung selbstverständlich auch andere Ladebereiche zwischen 0% und 100% mit abdeckt.

Fig. 7A veranschaulicht in der mit durchgezogener Linie dargestellten Ladekurve einen Lademodus "Sofortladen". Dieser zeichnet sich dadurch aus, dass der Ladevorgang unmittelbar mit t₁ beginnt. Gleichzeitig erfolgt das Laden aber nicht in maximaler Geschwindigkeit, um beispielsweise den Energiespeicher zu schonen und hohe Ladetemperaturen zu vermeiden. Zum Zeitpunkt t₂ ist der Energiespeicher maximal geladen (SOC = 100%).

Mit der gestrichelt dargestellten Ladekurve ist in der Fig. 7A dagegen ein Lademodus "Schnellladen" angegeben. Auch hier kann es vorgesehen sein, dass der Ladevorgang bei t₁ startet, wobei dann allerdings der Energiespeicher so schnell wie möglich geladen wird, d.h. mit maximal verfügbarer und vom Energiespeicher und der Ladesteuerung zugelassener Ladeleistung. Der Energiespeicher ist daher auch bereits zum Zeitpunkt t₃ maximal geladen, der deutlich vor dem Zeitpunkt t₂ liegt. Die Ladeleistung kann durch verschiedene Faktoren begrenzt sein oder werden, beispielsweise die Temperatur des Energiespeichers. Es sind daher geeignete Sensoren vorhanden, die zur Überwachung relevanter Betriebsparameter für den Ladevorgang geeignet sind, beispielsweise Temperatursensoren.

Die Ladekurven der Fig. 7B zeichnen sich dagegen dadurch aus, dass der Zeitpunkt t₁ und der tatsächliche Beginn des Aufladens des Energiespeichers mit elektrischer Energie auseinanderfallen bzw. zeitversetzt zueinander sind. In diesem Kontext kann ein Lademodus "Laden nach definierter Startzeit" vorgesehen sein, der vorsieht, dass mit dem tatsächlichen Laden zu einer vorher festgelegten Zeit t₄ (gestrichelte Kurve) begonnen wird. Dieser Zeitpunkt t₄ kann beispielsweise vom Bediener festgelegt werden. Zwischen dem Starten des Ladevorgangs als Ganzes und dem Beginn des tatsächlichen Beladens des Energiespeichers liegt hier demnach der Zeitraum t₁ bis t₄. Auf diese Weise ist es möglich, Zeiten für den Ladevorgang auszuwählen, zu denen elektrische Energie, insbesondere an der externen Ladequelle, zuverlässig ausreichend zur Verfügung steht. Vollständig geladen ist der Energiespeicher zum Zeitpunkt t₅.

Alternativ hierzu kann gemäß Fig. 7B ein Lademodus "Laden nach definierter Zielzeit" vorgesehen sein. Der Kernvorteil dieses Lademodus liegt darin, dass der Ladevorgang zu einem vorgegebenen Zeitpunkt t₇, beispielsweise früh morgens, beendet wird. Auch dieser Zeitpunkt kann vom Bediener vorgegeben werden. Die Ladesteuerung umfasst für diesen Lademodus eine Prognosefunktion, mit deren Hilfe, beispielsweise ausgehend von aktuellen SOC des Energiespeichers und unter Berücksichtigung der an der externen Ladequelle verfügbaren Ladeleistung, von der Ladesteuerung zum Zeitpunkt t₁ ermittelbar ist, wann das tatsächliche Laden des Energiespeichers gestartet werden muss, um zum Zeitpunkt t₇ den gewünschten Ziel-SOC des Energiespeichers zu erreichen. Diese Prognosefunktion kann beispielsweise ein in der Ladesteuerung hinterlegter geeigneter Algorithmus sein. Ist die Prognose von der Ladesteuerung ermittelt, kann ein ausgehend von t₁ festgelegter erforderlicher Startzeitpunkt t₆ festgelegt werden, zu dem mit dem tatsächlichen Laden begonnen werden muss, um schließlich zum Zeitpunkt t₇ das Ladeziel zu erreichen. Insbesondere auch für diesen Lademodus kann es vorgesehen sein, dass die Ladesteuerung ein Offset-Zeitfenster mit berücksichtigt, das einen Zeitraum darstellt, der von der vom Bediener vorgegebenen Zielzeit t₇ abgezogen wird. Um dieses Offset-Zeitfenster wird der Ziel-SOC somit gegenüber t₇ früher erreicht. Damit steht für den Ladezeitraum eine Art Zeitpuffer zur Verfügung, innerhalb dessen beispielsweise möglicherweise aufgetretene Minderverfügbarkeiten an elektrischer Energie für den Ladeprozess an der Ladequelle ausgeglichen und damit wieder aufgeholt werden können. Diese Offset-Zeitfenster kann vorzugsweise überdies dynamisch an den Umfang der erforderlichen Beladung des Energiespeichers angepasst werden. Je größer der Differenz-SOC zwischen Start-SOC und Ziel-SOC ist, desto länger kann das von der Prognosefunktion berücksichtigte Offset-Zeitfenster sein.

Es können Betriebssituationen auftreten, in denen die "Art" der an der externen Ladequelle variiert, beispielsweise hinsichtlich des Preises (Tagstrom vs. Nachtstrom) und/oder hinsichtlich der Erzeugung (aus nachhaltigen Methoden oder aus konventionellen Methoden). Dies kann vom in Fig. 7C gezeigten Lademodus "nachhaltiges Laden" (gestrichelte Ladekurve) berücksichtigt werden, der sich dadurch auszeichnet, dass der Ladevorgang zu einem Zeitpunkt gestartet wird, in dem an der Ladequelle aus nachhaltiger Stromerzeugung gewonnene elektrische Energie und/oder zu einem Nachttarif beziehbare elektrische Energie verfügbar ist. Dies bedeutet, dass der Ladevorgang auch hier zum Zeitpunkt t₁ zwar initiiert, die Ladesteuerung den tatsächlich Ladevorgang bzw. das Zuführen elektrischer Energie von der Ladequelle zum Energiespeicher aber erst zum Zeitpunkt t₈ zulässt, wenn beispielsweise günstigerer Nachtstrom an der Ladequelle verfügbar ist. Das tatsächliche Laden wird dann beispielsweise von der Ladeleistung her im Modus "Sofortladen" durchgeführt. Zum Zeitpunkt t₈ ist der Ziel-SOC des Energiespeichers erreicht. Die hier relevanten Zusatzinformationen zu zum Beispiel Strompreistarifen können manuell vom Bediener vorgegeben werden oder beispielsweise von einem Stromnetzbetreiber an die Ladequelle und/oder die Ladesteuerung übermittelt werden. Gleiches gilt auch für die "Art" der aktuell verfügbaren elektrischen Energie, also beispielsweise, ob "konventionell erzeugt" oder "nachhaltig erzeugt".

Der Energiespeicher 10 ist wiederaufladbar. Derartige Energiespeicher altern schneller, wenn das Be- und Entladen unter für den Energiespeicher ungünstigen Betriebsbedingungen, zum Beispiel zu hohen Temperaturen des Energiespeichers, erfolgt. Um den Energiespeicher möglichst verschleißarm zu Laden, kann ein Lademodus "batterieschonendes Laden" vorgesehen sein (in Fig. 7C die durchgezogene Ladekurve). Die Ladekurve zwischen t₁₀ und t₁₁ ist vergleichsweise flach, so dass der für den Ladevorgang erforderliche Zeitraum, beispielsweise gegenüber den Ladekurven aus der Fig. 7A verhältnismäßig lang ist. Die Ladesteuerung kann in diesem Fall für den Verschleiß des Energiespeichers relevante Betriebsparameter überwachen, beispielsweise dessen Temperatur. Sollte die Ist-Temperatur beispielsweise eine Temperaturschwelle während des Ladevorgangs übersteigen, kann die Ladesteuerung Maßnahmen ergreifen, die dem entgegenwirken, beispielsweise eine Reduktion der Ladeleistung und/oder die Aktivierung von Kühlmaßnahmen.

Die bisher dargestellten Lademodi können vom Start der tatsächlichen Beladung des Energiespeichers mit elektrischer Energie bis zum Erreichen des Ziel-SOCs im Wesentlichen gleichmäßig bzw. einstufig ablaufen. Alternativ hierzu kann aber auch ein mehrstufiger Ladevorgang vorgesehen sein, wie beispielsweise in der Fig. 7D veranschaulicht. Mit einem solchen mehrstufigen Ladevorgang können die Vorteile verschiedener Lademodi kombiniert werden. In der Fig. 7D erfolgt eine erste Ladestufe zwischen t₁₂ und t₁₃. Dies kann beispielsweise ein Zeitraum sein, zu dem vergleichsweise günstige elektrische Energie verfügbar ist. Die Ladesteuerung lädt den Energiespeicher bis zu einem ersten SOC, im vorliegenden Beispiel 60%. Zwischen t₁₃ und t₁₄ wird lediglich dieser SOC im Energiespeicher aufrechterhalten. Bei t₁₄ initiiert die Ladesteuerung dann die zweite Ladestufe, beispielsweise im Lademodus "Laden nach definierter Zielzeit" bis zum Erreichen des finalen Ziel-SOCs bei t₁₅. Die konkrete Ausgestaltung der einzelnen Ladestufen und deren Ladekriterien können selbstverständlich variieren, beispielsweise auch individuell vorgegeben und definiert werden, insbesondere in einem Lademodus "personalisiertes Laden".

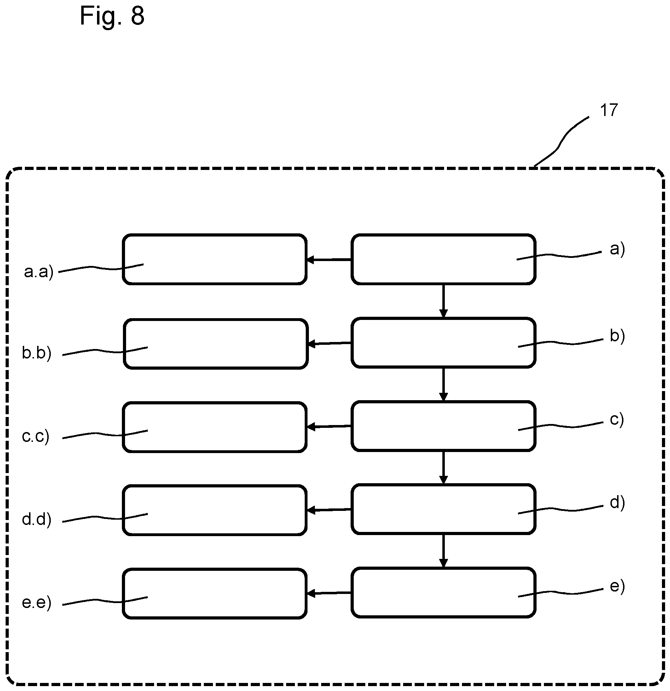

Fig. 8 verdeutlicht nun einen Ablauf eine erfindungsgemäßen Verfahrens 17, wobei zur weiteren Verdeutlichung der einzelnen Schritte insbesondere auch auf die vorhergehenden Ausführungen Bezug genommen wird.

Im Schritt a) Verbinden des Energiespeichers der Baumaschine mit einer externen Ladequelle, beispielsweise durch das Herstellen einer geeigneten Ladesteckerverbindung zwischen der Ladequelle und der Baumaschine. Davor oder danach ist im Schritt b) ein Auswählen eines Lademodus aus wenigstens zwei zur Verfügung stehenden und zueinander hinsichtlich des zeitlichen Ladeverlaufes verschiedenen Lademodi an einer Ladesteuerung vorgesehen. Hinsichtlich beispielhafter Ausführungsformen möglicher Lademodi wird insbesondere auch auf die Figuren 7A9 bis 7D) verweisen. Im Schritt c) erfolgt ein von der Ladesteuerung gesteuertes Laden des Energiespeichers aus der externen Ladequelle gemäß dem ausgewählten Lademodus. Schließlich erfolgt im Schritt d) ein Beenden des Ladevorgangs, insbesondere dann, wenn der gewünschte SOC des Energiespeichers erreicht worden ist. Anschließend wird im Schritt e) die Verbindung des Energiespeichers der Baumaschine mit der externen Ladequelle getrennt, so dass die Baumaschine mit nun gefülltem Energiespeicher von der Ladequelle abfahren kann.

Die Schritte a) bis e) können in bevorzugten Weiterbildungen weiter variiert werden, was in Fig. 8 durch die Optionen a.a) bis e.e) angegeben ist, die jeweils für sich oder aber auch in Unterkombination miteinander vorgesehen sein können. Die nachstehenden Ausführungen hierzu sind dabei lediglich ergänzend zu den Angaben im vorhergehenden, allgemeinen Teil der Beschreibung zu verstehen.

a.a) und/oder e.e) kann beispielsweise das Sperren und/oder Aktivieren einer oder mehrerer Maschinenfunktionen betreffen, wenn die Verbindung des Energiespeichers mit der externen Ladequelle, sei es physisch oder zumindest auf einer Kommunikationsebene, erkannt wird. b.b) kann neben der konkreten Auswahl wenigstens eines Lademodus beispielsweise zusätzlich einen Nachweis einer Benutzerberechtigung umfassen. c.c) ist in vielerlei Hinsicht weiter ausgestaltbar, beispielsweise im Hinblick auf über den Ladevorgang hinweg überwachte Betriebsparameter, beispielsweise eine Temperaturüberwachung des Energiespeichers etc. Auch die Kriterien für das Beenden des Ladevorgangs können gemäß d.d) beispielsweise abhängig vom Ladezustand, der Ladezeit etc. festgelegt werden. Für sämtliche der Verfahrensschritte kann es zudem vorgesehen sein, dass diese von der Ladesteuerung und/oder einer Maschinensteuerung dokumentiert werden, insbesondere auslesbar sind und/oder an eine Empfangseinrichtung, beispielsweise eines Mobildevices und/oder einer zentralen Serverstation, übermittelt werden.

Fig. 9 schließlich veranschaulicht Ausführungsbeispiele möglicher und bevorzugter Antriebsstränge der Baumaschine 1. Als Primärantriebsaggregat kann ein Elektromotor 18 vorhanden sein, der mit elektrischer Energie aus dem Energiespeicher 10 gespeist wird. Dieser kann als Direktantrieb eine Fahreinrichtung und/oder eine Arbeitseinrichtung 19 (in der Fig. 9 ist beispielsweise ein Unwuchterreger dargestellt) antreiben. Diese Variante ist mit 18.1 angegeben. Ergänzend oder alternativ kann jedoch auch ein elektrohydraulisches Antriebskonzept vorgesehen sein, bei dem der Elektromotor (Variante 18.2) eine Hydraulikpumpe 19 antreibt, die wiederum über einen Hydraulikkreislauf 20 einen Hydraulikmotor 21 antreibt, der im vorliegenden Ausführungsbeispiel in Antriebsverbindung mit einer Fahreinrichtung 6 steht. Es kann nun vorgesehen sein, dass der Motor 18.2 mehrere Pumpen 19 antreibt und/oder das mehrere Motoren 18.2 vorhanden sind, die jeweils für sich eine oder mehrere Pumpen 19 antreiben. Dies ist in Fig. 9 mit dem optional vorhandenen weiteren Hydraulikkreislauf zur einer Unwuchterreger mit dem Elektromotor 18.3 gezeigt.

Der Energiespeicher 10 umfasst mehrere Speichersektionen 10.1 und 10.2. Die Ladesteuerung 14 ist derart ausgebildet, dass sie den Ladevorgang beider Speichersektionen 10.1 und 10.2 individuell überwachen und steuern kann.

Insbesondere Teil der Baumaschine kann auch eine Anzeige- und Eingabeeinrichtung 10 sein, über die beispielsweise eine Auswahl des Lademodus, eine Anzeige des Ladestatus etc. möglich ist. Diese kann auch eine nicht näher dargestellte Kommunikationseinrichtung (in Fig. 9 mit dem WLAN-Symbol angedeutet) mit Sende- und Empfangseinheit umfassen, um beispielsweise mit anderen Baumaschinen 1, der Ladequelle 11 oder einem Mobildevice/eine zentralen Serverstation kommunizieren zu können.

## Patentansprüche

1. Verfahren (17) zum Laden eines Energiespeichers (19) einer, insbesondere selbstfahrenden, Baumaschine (1) mit elektrischer Energie, umfassend die folgenden Schritte:
a) Verbinden des Energiespeichers der Baumaschine (1) mit einer externen Ladequelle (11);
b) Auswählen eines Lademodus aus wenigstens zwei zur Verfügung stehenden und zueinander hinsichtlich der zeitlichen Ladeverlaufes verschiedenen Lademodi an einer Ladesteuerung (14);
c) von der Ladesteuerung (14) gesteuertes Laden des Energiespeichers (10) aus der externen Ladequelle (11) gemäß dem ausgewählten Lademodus;
d) Beenden des Ladevorgangs;
e) Trennen der Verbindung des Energiespeichers (10) der Baumaschine (1) mit der externen Ladequelle (11).

2. Verfahren (17) gemäß Anspruch 1,
**dadurch gekennzeichnet,**
**dass** im Schritt a) wenigstens ein Erkennen der Verbindung des Energiespeichers (10) mit der externen Ladequelle (11) und daraufhin
- ein Sperren wenigstens einer Maschinenfunktion, insbesondere ein Sperren eines Fahrantriebs (9) und/oder Unwuchterregerantriebs, und/oder
- ein Aktivieren wenigstens einer Maschinenfunktion, insbesondere einer Anzeigeeinrichtung und/oder einer Ladesteckerverriegelung und/oder eines Ladevorgangs
erfolgt.

3. Verfahren (17) gemäß einem der vorhergehenden Ansprüche,
**dadurch gekennzeichnet,**
**dass** die im Schritt b) auswählbaren Lademodi wenigstens einen der folgenden Lademodi umfassen:
- ein Lademodus "Sofortladen", der sich dadurch auszeichnet, dass mit einer festgelegten und bevorzugt wenigstens 20% unterhalb einer maximal möglichen und/oder verfügbaren Ladeleistung geladen wird;
- ein Lademodus "Schnellladen", der sich dadurch auszeichnet, dass mit einer maximal verfügbaren Ladeleistung geladen wird;
- ein Lademodus "Laden nach definierter Startzeit", der sich dadurch auszeichnet, dass der Ladevorgang zu einer vorgegebenen Zeit gestartet wird;
- ein Lademodus "Laden nach definierter Zielzeit" der sich dadurch auszeichnet, dass der Ladevorgang zu einer vorgegebenen Zeit beendet wird, insbesondere zu einem vorgegebenen Ladezustand des Energiespeichers (10) ;
- ein Lademodus "nachhaltiges Laden" der sich dadurch auszeichnet, dass der Ladevorgang zu einem Zeitpunkt gestartet wird, in dem an der Ladequelle (11) aus nachhaltiger Stromerzeugung gewonnene elektrische Energie und/oder zu einem Nachttarif beziehbare elektrische Energie verfügbar ist;
- ein Lademodus "batterieschonendes Laden", der sich dadurch auszeichnet, dass der Ladevorgang optimiert auf Eigenschaften des elektrischen Energiespeichers (10) hin erfolgt;
- ein Lademodus "mehrstufiges Laden", der sich dadurch auszeichnet, dass die Ladephase in wenigstens zwei Ladestufen unterteilt ist, wobei die Ladestufen aufeinanderfolgend zeitlich nacheinander zu erreichen sind und bei zueinander verschiedenen Ladezuständen des Energiespeicher (10)s beginnen;
- ein Lademodus "personalisiertes Laden", der sich dadurch auszeichnet, dass mehr als ein Ladeparameter von einem Bediener vorgebbar ist.

4. Verfahren (17) gemäß einem der vorhergehenden Ansprüche,
**dadurch gekennzeichnet,**
**dass** im Schritt b) ein Nachweisen einer Benutzerberechtigung vor dem Auswählen eines Lademodus erfolgt.

5. Verfahren (17) gemäß einem der vorhergehenden Ansprüche,
**dadurch gekennzeichnet,**
**dass** im Schritt c) ein Überwachen der Temperatur des Energiespeichers (10) und gegenüber dem ausgewählten Lademodus priorisiertes Reduzieren der Ladeleistung erfolgt, wenn die Temperatur des Energiespeichers (10) eine Temperaturschwelle überschreitet.

6. Verfahren (17) gemäß einem der vorhergehenden Ansprüche,
**dadurch gekennzeichnet,**
**dass** im Schritt d) wenigstens einer der folgenden weiteren Schritte erfolgt:
- das Beenden erfolgt beim Erreichen eines vorgegebenen Ladezustandes;
- das Beenden erfolgt zeitabhängig;
- das Beenden erfolgt zeitabhängig, wobei in Bezug auf eine vorgegebene Zielzeit ein Offset-Zeitfenster vorgesehen ist, welches die vorgegebene Sollzielzeit um das Offset-Zeitfenster vorverlegt;
- das Beenden das Ladevorgangs umfasst ein Anzeigen des Beendens mittels einer Signalisiereinrichtung.

7. Verfahren (17) gemäß einem der vorhergehenden Ansprüche,
**dadurch gekennzeichnet,**
**dass** der Schritt e) ferner ein zum Trennen
- zeitlich vorgelagertes Deaktivieren einer Maschinenfunktion, insbesondere Entriegeln einer Ladesteckerverriegelung, und/oder Aktivieren einer Maschinenfunktion und/oder
- zeitlich nachgelagertes Aktivieren einer Maschinenfunktion, insbesondere ein Freigeben eines Fahrantriebs (9) und/oder eines Unwuchterregerantriebs,
umfasst.

8. Verfahren (17) gemäß einem der vorhergehenden Ansprüche,
**dadurch gekennzeichnet,**
**dass** der Energiespeicher (10) wenigstens zwei Speichersektionen (10.1, 10.2) mit jeweils einem eigenen aktuellen Ladestand aufweist, wobei das Laden des Energiespeichers (10) für den Fall, dass sich die Ladestände der beiden Speichersektionen (10.1, 10.2) zueinander unterscheiden, derart erfolgt, dass zunächst diejenige Speichersektion (10.1, 10.2), die aktuell einen gegenüber der anderen Speichersektion (10.1, 10.2) niedrigeren Ladestand hat, zunächst auf den Ladestand der anderen Speichersektion (10.1, 10.2) geladen wird und erst anschließend beide Speichersektionen (10.1, 10.2) gemeinsam weiter geladen werden.

9. Verfahren (17) gemäß einem der vorhergehenden Ansprüche,
**dadurch gekennzeichnet,**
**dass** eine Kommunikationseinrichtung mit einer Sendeeinrichtung und einer Empfangseinrichtung vorhanden ist, wobei die Sendeeinrichtung zur Übermittlung von Informationen zu einem oder mehreren der Verfahrensschritte gemäß den vorhergehenden Ansprüchen an die Empfangseinrichtung ausgebildet ist, wobei das Übermitteln dieser Informationen während einem oder mehreren der Schritte a) bis e) erfolgt.

10. Verfahren (17) gemäß Anspruch 8,
**dadurch gekennzeichnet,**
**dass** ein bidirektionales Kommunizieren zwischen einem maschinenseitigen Kommunikationsteil der Kommunikationseinrichtung und einem externen Kommunikationsteil der Kommunikationseinrichtung erfolgt, wobei insbesondere ein Übermitteln von Steuervorgaben zu wenigstens einem der Schritte b) und d) von dem externen Kommunikationsteil zum maschinenseitigen Teil der Kommunikationseinrichtung erfolgt.

11. Verfahren (17) gemäß einem der vorhergehenden Ansprüche,
**dadurch gekennzeichnet,**
**dass** ein Laden von mehreren, gleichzeitig mit einer externen Ladequelle (11) verbundenen Maschinen abläuft, wobei ein Überwachen und Koordinieren der einzelnen Ladevorgänge der mehreren Maschinen entweder
- mithilfe einer den einzelnen Ladesteuerungen (14) hierarchisch übergeordneten Überwachungsladesteuerung erfolgt
oder
- mithilfe eines Ladeabstimmungsprozesses zwischen allen Ladesteuerungen (14) der gleichzeitig mit der externen Ladequelle (11) verbundenen Maschinen.

12. Baumaschine (1), insbesondere Bodenverdichtungsmaschine, und externe Ladequelle (11), die Baumaschine (1) umfassend
- einen Energiespeicher (10) zur Speicherung von elektrischer Energie;
- einen Elektromotor, der aus dem Energiespeicher (10) mit elektrischer Energie versorgt wird, wobei ferner eine Ladesteuerung (14) vorhanden ist, die derart ausgebildet ist, dass sie den Ladevorgang des Energiespeicher (10)s mit elektrischer Energie aus der externen Ladequelle (11) steuert,
**dadurch gekennzeichnet,**
**dass** die Baumaschine (1), die externe Ladequelle (11) und die Ladesteuerung (14) zusammen zum Durchführen des Verfahrens (17) gemäß einem der vorhergehenden Ansprüche ausgebildet sind.

13. Baumaschine (1) gemäß Anspruch 12,
**dadurch gekennzeichnet,**
**dass** sie einen Maschinenrahmen mit einem Vorderrahmen und mit einem Hinterrahmen aufweist, wobei der Vorderrahmen mit dem Hinterrahmen über ein Knickgelenk miteinander verbunden sind.

14. Baumaschine (1) gemäß einem der Ansprüche 12 oder 13,
**dadurch gekennzeichnet,**
**dass** der Energiespeicher (10) am Vorderrahmen angeordnet ist und wenigstens teilweise von einer Haube überdeckt ist, wobei im Vorderrahmen in Vertikalrichtung unterhalb der Haube eine Ladeverbindungsdurchgangsöffnung, insbesondere Ladesteckerdurchgangsöffnung (12), vorhanden ist, in die ein mit der Ladequelle (11) in Verbindung stehender Ladestecker zur Herstellung einer Ladeverbindung zwischen dem Energiespeicher (10) und der Ladequelle (11) einsteckbar ist.

15. Baumaschine (1) gemäß einem der Ansprüche 12 bis 14,
**dadurch gekennzeichnet,**
**dass** der Elektromotor eine hydraulische Fahrantriebspumpe (19) und/oder eine hydraulische Erregerantriebspumpe (19) antreibt.
